(19) Europäisches Patentamt
European Patent Office
Office européen des brevets

(11) **EP 3 797 016 B1**

(12) **EUROPEAN PATENT SPECIFICATION**

(45) Date of publication and mention
of the grant of the patent:
**27.03.2024 Bulletin 2024/13**

(21) Application number: **19732735.6**

(22) Date of filing: **20.05.2019**

(51) International Patent Classification (IPC):
**B25J 9/10** (2006.01)   **B25J 9/16** (2006.01)
**B25J 19/06** (2006.01)   **F16D 13/26** (2006.01)
**F16D 23/12** (2006.01)

(52) Cooperative Patent Classification (CPC):
**B25J 9/1045; B25J 9/1646; B25J 19/068;**
F16D 13/26; F16D 23/12; F16D 2023/126;
F16D 2300/14

(86) International application number:
**PCT/IB2019/054140**

(87) International publication number:
**WO 2019/224690 (28.11.2019 Gazette 2019/48)**

(54) **CONTROLLED-CLUTCH ACTUATOR DEVICE AND METHOD, IN PARTICULAR FOR ROBOTIC APPLICATIONS**

BETÄTIGERVORRICHTUNG MIT KONTROLLIERTER KUPPLUNG UND VERFAHREN, INSBESONDERE FÜR ROBOTERANWENDUNGEN

DISPOSITIF D'ACTIONNEUR À EMBRAYAGE COMMANDÉ ET PROCÉDÉ, EN PARTICULIER POUR DES APPLICATIONS ROBOTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2018 IT 201800005550**

(43) Date of publication of application:
**31.03.2021 Bulletin 2021/13**

(73) Proprietors:
• **Fondazione Istituto Italiano di Tecnologia**
  16163 Genova (IT)
• **UNIVERSITA' DEGLI STUDI DI GENOVA**
  16126 Genova (IT)

(72) Inventors:
• **MALZAHN, Jorn**
  16147 Genova (IT)
• **DEV AMARA, Vishnu**
  16142 Genova (IT)
• **TSAGARAKIS, Nikolaos**
  16148 Genova (IT)

(74) Representative: **Metroconsult Srl**
**Via Sestriere, 100**
**10060 None (TO) (IT)**

(56) References cited:
WO-A1-2017/185176    JP-A- 2013 208 293
JP-B2- 3 578 375    US-A1- 2012 096 973
US-A1- 2014 074 293

• FLORIAN PETIT ET AL: "Bidirectional antagonistic variable stiffness actuation: Analysis, design & Implementation", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 4189-4196, XP031708376, ISBN: 978-1-4244-5038-1

**Description**

The present invention concerns, in a general aspect thereof, the actuation of mechanical members such as, in particular, components of articulated mechanisms for robotic applications and the like.

As is known, an important aspect of such mechanisms, especially those used in the medical field, for assisting persons with reduced mobility, or even in disaster rescue scenarios, lies in effective actuation and control of the movable members.

Such effectiveness is dependent on a number of factors, which are not always easy to combine.

A first factor relates to the fact that, in order to control the motion of mechanical members such as, for example, articulated arms, robots, exoskeletons, etc., a non-negligible amount of energy is required for supplying power to the various electric motors that are generally employed.

It should be noted that, in general, such electric motors or actuators control the motion of articulated transmissions or kinematic chains, i.e. a series of two or more elements such as bars, tie rods and the like diversely connected to one other; this is also useful to limit the number of actuators in use, as well as to comply with construction and/or design requirements, since the electric motors are preferably disposed on the frame or on the base, or anyway on a load-bearing component of the structure, while the movable member to be controlled may be located peripherally at some distance therefrom.

This is the case, for example, of the peripheral gripping arm or articulations of a humanoid robot, which are moved by an actuation system wherein the motor is located in a central area of the structure.

This is also due to requirements in terms of center of gravity and weight distribution, which must be met in order to maintain the balance of the structure itself, which might otherwise suffer from stability problems if the motors or other heavy components were arranged peripherally.

Because they must be movable within disparate environments, the robotic apparatuses briefly described above are preferably equipped with electric power supply batteries. One important aspect of this type of robotic apparatuses relates to their operating range; to this end, systems are known in the art which are aimed at optimizing power consumption by exploiting the various operating phases of the robotic apparatuses. From an actuation viewpoint, low-consumption power electronics and electric motors are used for better energetic efficiency, in addition to low inertiae and mechanical components of transmissions and linkages made of light, low-friction materials.

Some scientific publications (Sangok Seok, Albert Wang, Meng Yee Michael Chuah, et al.: "Design Principles for Energy-Efficient Legged Locomotion and Implementation on the MIT Cheetah Robot", IEEE/ASME Transactions on Mechatronics, 20(3): 1117-1129, June 2015, hereafter simply [2]; Davis Meike and Leonids Ribickis: "Energy Efficient use of robotics in the automobile industry", Advanced Robotics (ICAR), 2011 15th International Conference, IEEE pages 507-511, hereafter simply [3]; Farshid Naseri, Ebrahim Farjah, Teymoor Ghanbari; "An Efficient Regenerative Braking System Based on Battery/Supercapacitor for Electric, Hybrid and Plug-In Hybrid Electric Vehicles with BLDC Motor", IEEE Transaction on Vehicular Technology, pages 1710-1715, 2016, hereafter simply [4]) teach to exploit the regenerative braking of mobile mechanical parts to obtain increased energetic efficiency by converting mechanical energy into electric energy useful for recharging charge accumulation means, such as batteries or ultracapacitors.

Further progress in this respect is shown in publication "Enhanced approach for energy-efficient trajectory generation of industrial robots" (Christian Hansen, Julian Itjen, Davis Meike and Tobias Ortmaier, in Automation Science and Engineering (CASE), 2012 IEEE International Conference, pages 1-7, IEEE2012, hereafter simply [5]), which illustrates strategies for efficient trajectory control and planning, aimed at optimizing movements with the least energy consumption and maximum regeneration.

Other solutions utilize the resonance frequency of the electric motors, which are powered at such frequencies for periodic movements, as opposed to continuously, thus saving energy.

In addition to regenerative braking systems, robotic apparatuses also make use of clutch couplings with a torque-limiting function.

In fact, in order to prevent possible damage to articulated mechanisms in case of shocks or sudden stops of their moving parts, it is known to add, along the kinematic chain between the actuator and the peripheral mobile or follower members, a clutch that allows limiting the backward torque transmitted in the event of external stresses exceeding a predefined limit.

Let us consider, for example, a self-moving robot or an articulated gripping arm hitting an obstacle as it moves or undergoing a sudden overload, inducing a stress in the mechanism that results in a resistant torque opposing the drive torque.

The clutch permits relative movement or slipping about the axis of rotation when a predefined limit torque is reached, thereby avoiding the transmission of excessive stresses that might damage the mechanical components, including the actuator.

One example of this solution is known from publication "Exploiting the Slip Behaviour of Friction Based Clutches for Safer Adjustable Torque Limiters" (Yushi Wang et al., July 3-7, 2017; 2017 IEEE International Conference on Advanced Intelligent Mechatronics (AIM), hereafter simply D1]).

The clutch thus implemented, which may be a plate clutch, a conical clutch or a clutch of another *per se* known type, is *de facto* a passive safety component, which performs no other function than that of limiting the torque being transmitted during the operation of the robotic apparatus.

**From published patent documents** US 2014/074293**,** JP 3 578375**,** WO 2017/185176**, and** Florian Petit et al: "Bidirectional antagonistic variable stiffness actuation: Analysis, design & implementation" (2010 IEEE International Conference on Robotics and Automation ICRA - 3 May 2010**) there are known robotic transmission systems where the actuation of the clutches takes place thanks to the use of motors purposely provided.**

**These systems thus require energy consumption of the motors for operating the clutches.**

In light of this brief analysis of the state of the art, it can be stated that the present invention aims at improving the performance of known robotic apparatuses by overcoming the limitations or contraindications of the latter.

In particular, a technical problem addressed by the invention is to provide a method and a related actuator device that allow limiting or reducing the consumption of electric energy.

Another technical problem addressed by the invention is to provide a method and an actuator device that, in addition to increasing safety by limiting the maximum transmissible torque, also contributes to controlling the operation and/or managing the load of the apparatus.

Further objects and technical problems associated with the invention will become apparent in the light of the following description.

In order to achieve such object and solve the above-mentioned technical problems, the basic idea of the invention is to use the clutch not only as a passive safety component intended for overload limitation, but also as an active component contributing to controlling the operation of the actuator and/or managing the load.

For such purpose, the clutch operates as an active component capable of engaging together two shafts connected by it (as in motor vehicles) in a controlled manner, i.e. according to a force that may be changed over time as a function of the operating conditions of the robotic apparatus.

Advantageously, the operation of the clutch is coordinated with that of the motor means of the actuator, with the inertiae of the system, with the load and/or other variables that may from time to time be relevant for controlling the operation of the robotic apparatus.

In accordance with the invention, the clutch is actuated by and/or associated with the motor means of the actuator: this makes it possible to omit specific clutch actuating means, thus reducing the power consumption and also the weight and complexity of the apparatus, from both the structural and functional viewpoints. Furthermore, the actuation method and device of the invention thus conceived can be implemented in a simple manner by using commercially available components, resulting in lower costs.

The features of the invention are specifically set out in the claims appended to this description.

Such features, the effects deriving therefrom, and the advantages attained by the invention will become more apparent in the light of the following description of an embodiment thereof as schematically illustrated in the annexed drawings, which are provided by way of non-limiting example, wherein:

- Fig. 1 shows an example of an actuator device according to the invention;
- Figs. 2a, 2b show respective embodiments of parts of the actuator device of Figure 1;
- Fig. 3 shows a side view of the parts of Figures 2a, 2b in the assembled condition;
- Figs. 4a, 4b are respective diagrams illustrating the trend of some operating parameters of the actuation method according to the invention;
- Figs. 5a, 5b are respective graphs showing the time-related trend of some parameters and the activation of the clutch;
- Figs. 6a, 6b are respective graphs similar to those of Figs. 5a, 5b, which show the trend of the same parameters upon different demands of mechanical power;
- Fig. 7 is a further diagram illustrating the efficiency of the actuation method of the invention;
- Figs. 8a, 8b show a variant of the parts of the device shown in Figs. 2a, 2b;
- Fig. 9 is a side view of the parts of Figures 8a, 8b;
- Fig. 10 shows a detail of the device of Figures 8 and 9;
- Fig. 11 shows further possible variants of the parts of Figs. 2a, 2b;
- Fig. 12 shows further possible variants of a component of the device of Fig. 1.

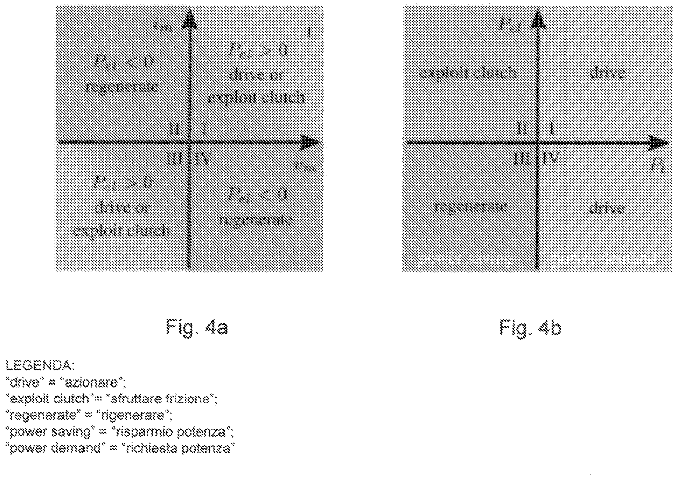

With reference to the above-listed figures, for a better understanding of the invention the basic principles of the actuation method according to the invention will be explained first. For this purpose, reference can be made to the diagrams shown in Figures 4a, 4b, 5a, 5b, 6a, 6b, 7, which illustrate the operating parameters of the actuator; as can be seen, the underlying principle of the invention is to exploit the backward actuation of the articulated robotic mechanism, i.e. when the load acts reversibly as a motor as a consequence of inertiae and gravity; this is accomplished by using the clutch, which enables the backward actuation function at the most appropriate times and in the most appropriate manners, as a function of the system's conditions.

Preferably, the system can be acted upon by controlling the power flow in the articulated mechanism.

For example, a necessary energy-saving condition is a mechanical power flow Pi directed from the load towards the actuator; in the diagram of Figures 4a, 4b, this situation is associated with mechanical power having a negative sign " - " (minus), i.e. $P_1 < 0$.

As a consequence, the positive sign " + " ($P_1 > 0$) means that mechanical power is being transferred from the actuator, or anyway from the motor means, towards the load; the diagrams of Fig. 4a, 4b illustrate this concept graphically.

Although the actuator or motor means can recover energy, the negative sign in the flow of mechanical power still is not a sufficient condition for saving energy by actuating the clutch.

In an implementation example electric actuators will be taken into account, assuming that the power electronics that controls such actuators can operate on all four quadrants shown in the "voltage-current" diagrams of Figures 4a, 4b.

As can be seen, the invention allows saving energy by exploiting the series activation of the clutch every time a motion phase shows a flow of mechanical power in the load and energy recovery is not feasible.

In order to allow a better understanding of the English terms of the diagrams of fig. 4a, 4b, the term "drive" can be translated as "azionare"; "exploit clutch" as "sfruttare la frizione";"regenerate" as "rigenerare"; "power saving" as "risparmio di potenza"; "power demand" as "richiesta di potenza".

The situation in the diagrams of Figs. 4a, 4b can be expressed in mathematical terms as a relationship like the following:

$$P_{ml}(t) = P_{el}|_{\tau_c = q_l(t)} = \underbrace{(J_m + J_l)\ddot{q}_l(t)\dot{q}_l(t)}_{P_{ml,l}} \dots$$

Where $P_{ml}$ corresponds to $P_{el}$ in the graph of Fig. 4a, 4b, and is the combined power generated by the actuators and by the load.

In this relationship, when the k parameter is active (k=1), supporting a desired movement with a fully engaged clutch would require the motor means to actively control the member to be moved, i.e. the follower.

By gradually disengaging the clutch, the desired movement of the mobile member is supported by damping a part of the mechanical power $P_1(t)$ through the Coulomb damping term $D_c$, while the operation of the system is actually idle.

This damped part is marked as the degree of engagement R(t) of the clutch; the above relationship corresponds to a degree of engagement R=1

$$R(t) = \begin{cases} \min\left(|P_l(t)/\bar{D}_c(t)|,\ 1\right) & \kappa = 1, \\ 1 & \kappa = 0. \end{cases}$$

For a given speed of the follower member, the Coulomb damping term $D_c$ is upperly limited, and its limit is defined by the maximum backward control twisting torque $\tau_c$. Below this value, the series clutch exploits the intrinsic property of compensating for the Coulomb friction torque of the motor; the clutch engaged at a degree R generates the compensating torque: $\tau_R = \tau_e = kR(t)\tau_c(t)$.

Any torque of the load $\tau_l$ (follower member) greater than the engagement torque of the clutch $\tau_R$ will cause slipping, and the net mechanical work $W_R$ between the instants $t_1$ and $t_2$ can be calculated as:

$$W_R = \int_{t_1}^{t_2} \tau_R(t)\,\dot{q}_l(t)\mathrm{d}t\,.$$

Therefore, any resistant torque due to a collision of the articulated mechanism will be limited to the aforesaid torque, thus ensuring protection of both the actuation system and the persons and/or objects in the vicinity of the robotic apparatus according to the invention.

The maximum energy saving that can be obtained through the use of a series clutch can be determined on the basis of the harmonic movements of the follower member to be moved, with amplitude A and frequency $\omega$, so that $q_1 =$ arcsen ($\omega$t).

The maximum energy saving obtainable (percentage):

$$\eta = 100 \left(1 - \frac{E_{rem}}{E_{id}}\right)$$

is determined assuming an ideal clutch that requires no effort.

$$E_{rem} = \int_0^{2\pi/\omega} (1 - \kappa) \, P_{el}(t)\mathrm{d}t$$

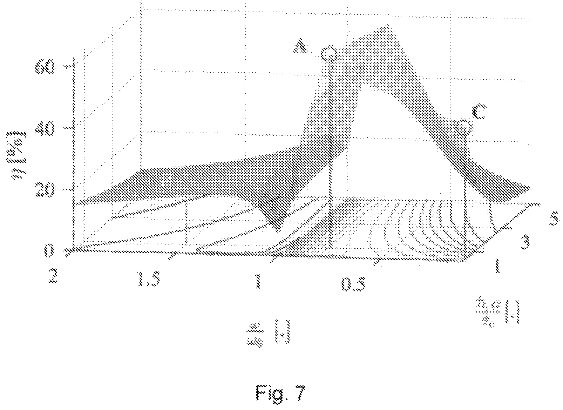

Thus, the maximum energy saving turns out to be independent of the selected clutch configuration or type, and thus represents a general reference for any embodiment of the invention, as far as the above-mentioned technical problems and purposes are concerned. The above explanation can be better understood with reference to the other graph shown in Figure 7 of the drawings, which shows the trend of efficiency, i.e. energy saving, as a function of (normalized) frequency and gravitational load, relative to the friction ratio. To this end, when continuous clutch control is not active, the ideal energy demand for one period of the harmonic motion of the mobile load or follower member can be computed as:

$$E_{id} = \int_0^{2\pi/\omega} (1 - \kappa(t)) \; P_{el}(t)\mathrm{d}t$$

The graph of Figure 7 illustrates the energy saving as a function of normalized frequency $\omega/\omega_0$, i.e. relative to the revolution speed $\omega_0$ of the rotary motion of the follower member; in the same graph (which is three-dimensional), one can see the ratio between the maximum torque $\tau_l$ due to the gravitational load and the maximum Coulomb friction torque of the motor $\tau_c$.

For revolution frequencies $\omega_0$ within the range 0.5-0.9, the invention allows saving up to 60 % of the energy, in a manner nearly independent of the mass of the follower member; for lower frequencies, the continuously applied clutch can lead to an energy saving of up to 45%.

With an increasing mass of the follower member, the gravitational load becomes predominant compared to the internal friction of the motor means and/or actuators: the clutch may exploit just the friction of the motor, if the intrinsic friction torque is sufficient to slow down the motion of the follower member to the desired speed.

The duration of these motion phases becomes shorter as the maximum gravitational torque increases: as a first approximation, this increase depends on the weight of the follower member.

This situation results, therefore, in shorter phases of disengagement (or release) of the clutch.

For frequencies higher than the natural one $\omega_0$ of the system, the principle based on which the invention allows saving energy consists of allowing movements of the follower member due to the inertiae involved by disconnecting the motor, which exerts a braking action.

The mass of the follower member has little influence in this case, and energy savings of up to 24 % are possible for a revolution speed of about 1.1 $\omega_0$; the energy that can be saved decreases constantly for higher frequencies, as the motion phases with gradual clutch disengagement become increasingly shorter.

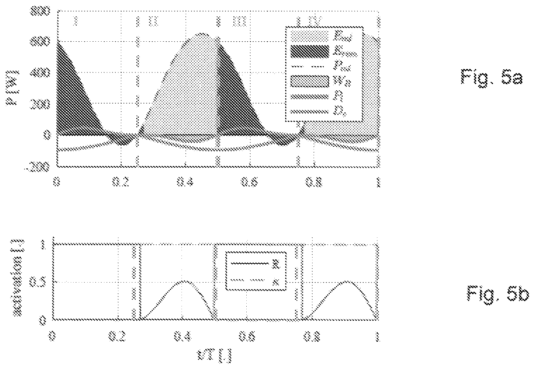

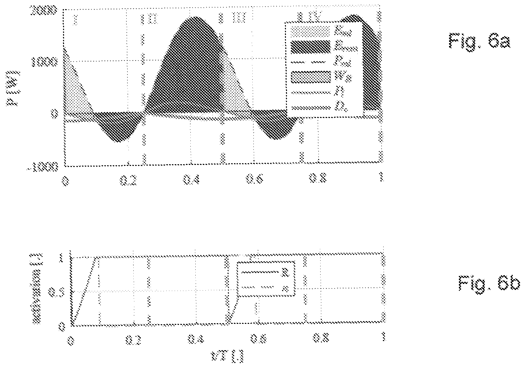

The graph pairs in Figures 5a, 5b and 6a, 6b respectively show the activation of the drive torque (Fig. 5a, 6a) and the degree of engagement of the clutch (5b, 6b) relative to the time t (normalized with respect to the period T of rotation) at the points indicated as A and B in the graph of Figure 7.

As can be seen, the clutch activation time for drive torque application is shorter than the rotation period, so that the load inertia can be exploited for a part of the time, which is substantially equal to that during which the drive torque is applied.

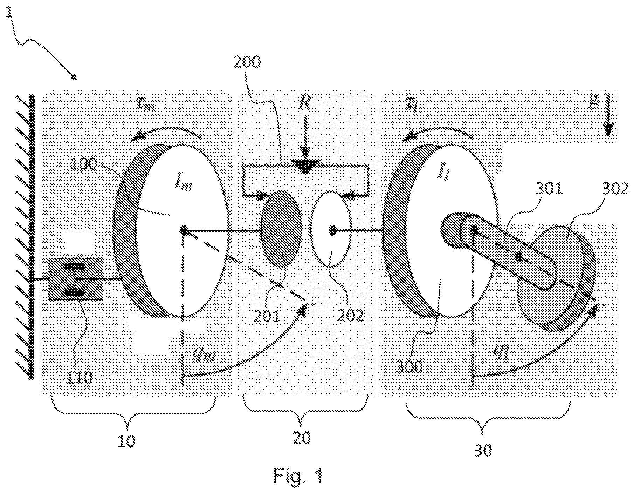

Figure 1 schematically shows one example of an actuation device 1 in accordance with the above explanation; it shows the parameters mentioned so far, in addition to the components of the device 1.

The configuration of the latter may be simplified, for easier understanding, as a set of three functional assemblies or units: a motor or drive torque assembly 10, a clutch or differential assembly 20, and a follower member assembly 30.

The first assembly 10 comprises a drive pulley 100, which may be actuated in any appropriate manner, as will be further discussed below; as concerns the preferred application of the invention to robotic apparatuses, such as, for example, a humanoid robot or an object gripping arm for an industrial production line, or the like, the drive pulley 100 is connected to and/or associated with an electric motor 110.

Several solutions are available for this purpose; for example, the pulley 100 may be fitted to the output shaft of the associated motor, or connected thereto by means of a mechanical transmission, which in turn may employ the most appropriate solutions, such as, for example, gear trains, flexible members like belts or the like, reducer mechanisms, etc.

In Fig. 1 the drive torque $\tau_m$ of the pulley 100 is indicated by the counterclockwise arrow, while the intrinsic resistant torque $\tau_c$ acts clockwise; $I_m$ indicates the inertia of the pulley 100, while $q_m$ is the current coordinate that defines the angular position of the pulley 100. The clutch assembly 20 essentially comprises a clutch coupling 200 and/or a differential mechanism; in the example of Fig. 1, the second assembly 20 comprises two opposed plates 201, 202, which can be engaged and released in a controlled manner by pushrods (not shown in the drawing for simplicity) that operate as indicated by the arrows, according to an engagement resultant R that depends on various parameters, as previously mentioned.

The clutch coupling 200 may be a dry or wet mechanical one, with a single plate or multiple plates, with springs, preferably commercially available for lower costs; the clutch coupling 100 may however be implemented in any other appropriate manner, e.g. hydraulic, electromagnetic, centrifugal, or by using any other modern technology.

What is important is that, regardless of the adopted solution, the clutch assembly 20 allows for progressive application and removal of the transmitted torque, by controlling the degree of engagement and/or disengagement of the clutch coupling 200. The clutch assembly 20 is kinematically connected to the motor assembly 10 upstream and to the follower member assembly 30 downstream.

In the representation of Fig. 1, the third assembly 30 comprises a driven pulley 300 to which an arm 301 is applied, which extends radially relative to the axis of rotation Z of the system.

For easier understanding of this example, to the end of the arm 301 a mass 302 is applied, which allows representing the load applied to the arm 301 (e.g. an object gripped by a robotized arm): the gravitational effect of this mass 302 is therefore obtained by multiplying the weight force acting thereupon (the direction of gravitational acceleration g is shown by the arrow at the top) by the length of the arm 301.

Some of the parameters previously mentioned in the explanation of the general principles of the invention are shown also for the follower member assembly 300, such as the resistant torque $\tau_l$, or the load inertia $I_l$ associated with the driven pulley 300 (designated as $I_l$ in Fig. 1). Of course, other parameters can be taken into account as well, depending on the different embodiments and possible variants of the invention.

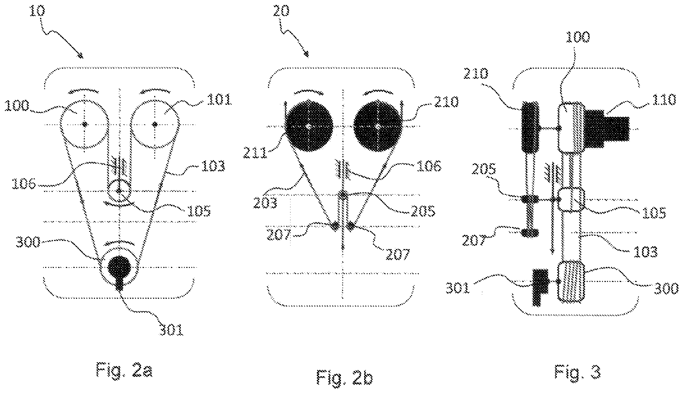

One of them is illustrated in Figures 2a, 2b, 3, which show a separate front view of a motor assembly 10 and a clutch assembly 20, respectively, and a side view of both in the assembled condition.

With reference to the previous observations, and considering the motor assembly 10 first, it comprises two drive pulleys 100, 101 arranged side by side higher than a driven pulley 300; the pulleys 100, 101 and 300 are connected to one another by a flexible element 103, which is closed in a loop, since it has no free ends, and preferably consists of a wire or a cable as in the example taken into account herein; however, other variants are also possible, e.g. a belt, a band, a chain, or the like.

Also for this reason, the configuration of the pulleys 100, 101, 300 may be different depending on the type of flexible element 103: in particular, pulleys may be used which have a flat or slightly convex groove, as shown in Figures 2a, 2b and 3, or a trapezoid groove when using wedge-shaped belts, or a generally square or rounded concave groove.

In accordance with a preferred embodiment of this example of the invention, the flexible element 103 is wound on the pulleys 100, 101 and 300 in a number of turns greater than one, which may vary from 2 to 4, 5, 6 or even more, depending on the application; in fact, the winding of the flexible element 103 on the pulleys 100, 101, 300 permits exploiting the capstan effect, according to which it is possible, with a relatively low effort on the pulling side of the flexible element 103 (i.e. the drive torque of the pulleys 100, 101), to compensate for a greater force on the load side.

As is known, in fact, according to the Euelero-Eytelwein formula: $T_{carico} = (T_{traz.} \times e^{\mu\varphi})$, where $\mu$ is the friction coefficient, and $\varphi$ is the winding angle that takes into account the number of turns wound around the pulley, the tension between the input branch and the output branch of the flexible element is amplified exponentially due to the friction along the groove.

The number of turns of the cable 103 on each one of the pulleys 100, 101, 300 depends, therefore, on the design sizing of the actuation device 1, i.e. on parameters such as the drive torque $\tau_m$ and resistant torque $\tau_l$, the applied load, the size (diameter) of the pulleys, the type of flexible element 103 (cable, belt, chain, etc.) in use, and so on.

Regardless of this, the tension of the flexible element 103 along its development between the pulleys 100, 101, 300, as well as its winding angle, is changed by a tensioning roller 105, which can advantageously move against the elastic action of a spring (not shown in Figures 2a, 2b, 3) along a guide 106 disposed along a vertical axis of symmetry Y-Y of the motor assembly 10, passing between the two drive pulleys 100, 101.

According to the operation of the motor assembly 10, when the pulleys 100, 101 turn in the same direction (clockwise or counterclockwise), the driven pulley 300 moves accordingly, imparting the desired motion to the arm 301; the weight of the latter allows exploiting the gravitational effect to cause it to return into the lowered position of equilibrium, with a backward motion opposite to the actuation one.

In this case, the backward motion is transmitted from the driven pulley 300 to the drive pulleys 100, 101, in a manner that is inverse to that of the initial motion.

As better illustrated in Figure 3, the drive pulleys 100, 101 are also equipped with a respective electric motor 110, which controls the rotation thereof in an independent and autonomous manner, in the clockwise and counterclockwise directions, according to the operating phases of the device 1.

The clutch assembly 20 is associated with the motor assembly 10 according to a juxtaposed arrangement, wherein a pair of second pulleys 210, 211 of the former are rotatably integral with the pulleys 100, 101 of the latter.

In this example, the clutch assembly 20 is essentially a differential mechanism that allows operating the clutch 310, which is incorporated in or associated with the follower member 300.

The clutch assembly 20 comprises also a flexible wire or cable 213 extending along the second pulleys 210, 211, which, unlike the previous one, is open at its ends: in particular, the ends of the wire 213 are respectively fixed to the second pulleys 210, 211, whereon it is wound and unwound depending on the direction of rotation thereof.

In the example shown in Figure 2b, the clutch assembly 20 includes a tensioning roller 205 that can translate vertically together with the one of the motor assembly 10; in this case, deviating rollers 207 are also included for deviating the path of the wire 203 from/to the second pulleys 210, 211 with a predefined winding angle relative to the vertical axis Y.

The tensioning rollers 105, 205 and the deviating rollers 207 are all idle and can all turn freely, complying with the movements of the flexible cables 103, 203.

As concerns the operation of the actuation device 1, the clutch assembly 20 and the cable 203 are useful to adjust the tension, and hence the friction, of the other cable 103 around the driven pulley 300.

For this purpose, the counter-rotating movements of the drive pulleys 100, 101, and hence also of the second pulleys 210, 211 that are integral therewith, as indicated by the arrows in Fig. 2b, cause the tensioning roller 205 to move upwards 205 against the elastic tensioning force $F_t$ acting vertically thereupon (as indicated by the arrow in Fig. 3). The tensioning force $F_t$ affects the friction between the pulling cable 103 and the driven pulley 300, according to the already mentioned law of Eulero-Eytelwein; friction creates a closing force that permits the transmission of a drive torque that is common to the arm 301 attached to the driven pulley 300, up to a maximum value of the friction torque $\tau_f$. By releasing the pulling cable 103, the load can be gradually removed from the drive pulleys 100, 101, thus allowing the follower member, i.e. the arm 301 in this case, to move freely, or to move backwards through the effect of inertia and gravity.

Together with the flexible cable 103, the drive pulleys 100, 101 include the series clutch required by the invention, while the differential assembly controls the gradual engagement and disengagement of the clutch.

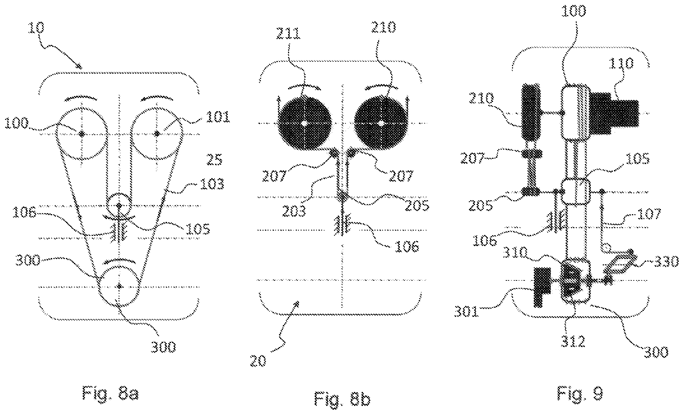

To this end, the clutch plates 201, 202 in the diagram of Fig. 1 can be incorporated into the pulleys 100, 101 or 300, according to different embodiments; therefore, the plates 201, 202, and more generally the active elements of the clutch 200, must not necessarily be flat, since they may also be configured otherwise, e.g. conical, as better illustrated in Figures 8 and 9.

Of course, depending on the different clutches adopted (dry or wet, centrifugal, mechanical or electromagnetic, hydraulic, etc.), it is possible to conceive as many possible variants of the solutions considered herein.

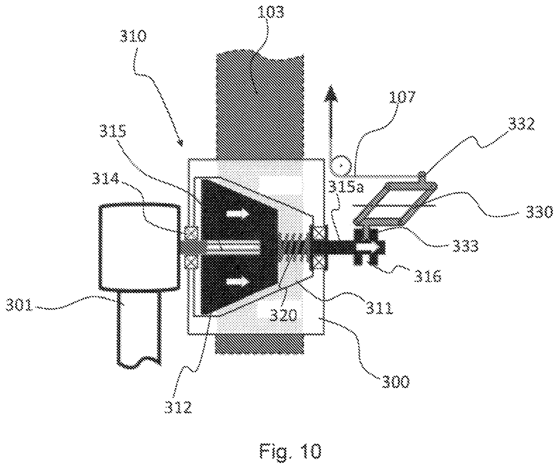

With reference to Figures 9 and 10, there is shown a conical clutch 310 incorporated into the driven pulley 300 of the actuation device 1.

For this purpose, within the pulley 300 a conical seat 311 is formed, which is preferably coated with a friction surface of braking material (such as "Ferodo ®"); materials commonly used for pads of car brakes may be suitable for forming the coating of the conical seat 311, e.g. materials based on or comprising aramid, ceramic, graphite, and the like.

The conical seat 311 houses a small wheel 312 having a conjugated conical shape, which is mounted on a shaft 315 disposed along the axis of the conical shape; the pulley can slide axially along the shaft 315, by which it is rotated, while the shaft 315 is rotatably supported on bearings 314 relative to the pulley 300.

On the shaft 315 a spring 320 is also applied, in a position between the conical wheel 312 and the bottom of the conical seat 311, which exerts an elastic action against the wheel 312 when the latter is moved towards the conical seat 311.

In practice, the spring 320 disengages the clutch 310 by elastically pushing the wheel 312 away from the conical seat 311, in contrast with the force applied by a control mechanism 330 acting upon the end portion 315a of the shaft 315 that protrudes in a cantilever fashion from the pulley 300.

In this case, the control mechanism 330 is a mechanism that comprises an articulated polygon 331 (a quadrilateral in the drawing), which is connected on one side to the tensioning roller 105 through a wire 107 having its end fixed to a peg 332, and on the opposite side to the shaft 315 through a coupling between a second peg 333 and a groove 316 on the shaft 315.

In substance, the sides of the articulated quadrilateral 331 that carry the pegs 332, 333 move in opposite directions under the action of the wire 107 tensioned by the movements of the roller 105 and by the countering force exerted by the spring 320; these movements are transmitted to the shaft 315 and to the conical wheel 312, so as to progressively engage or disengage the clutch 310 according to the various operating phases of the device 1 of the invention.

In fact, when the clutch 310 is disengaged, the wheel 312 is detached from the conical seat 311 (through the effect of the elastic force of the spring 320), and therefore the driven pulley 300 is in an idle condition, i.e. it transmits no drive torque to the arm 301: the latter is thus free to move, since it is only subject to gravity and/or its own inertia. Conversely, when the clutch 310 is engaged, the wheel 312 is attached to the conical seat 311 and therefore transmits the drive torque imparted to the driven pulley 300 by the cable 103 and by the drive pulleys 100, 101.

The movements of the control mechanism 330 of the clutch 310 depend on those of the roller 105, which are controlled through the actuation of the drive pulleys 100, 101 and of the second pulleys 210, 211 connected thereto.

According to the rotation (whether in the same or different directions) of the first pulleys 100, 101 and/or second pulleys 210, 211, an upward or downward movement of the integral rollers 105 and 205 is obtained, on which the tension of the wire 107 that controls the clutch 310 is dependent.

The latter does not require, therefore, a motor or other specific actuator means for its activation, in that with the solution considered herein it is possible to exploit the motors 110 of the pulleys 100, 101; this results in structural and functional simplification of the device, which is consequently also lighter and therefore suitable for robotic apparatuses. From a mathematical viewpoint, equations that define the system combining the two coupled motors 110 of the pulleys 100, 101 and the load 300, 301, transforming it into two independent systems, can be written by introducing a group of new status variables $\bar{q}, \tilde{q}, \bar{\tau}, \tilde{\tau}$ as follows:

$$\tilde{q}(t) = \frac{q_1(t) - q_2(t)}{2} \ , \quad \bar{q}(t) = \frac{q_1(t) + q_2(t)}{2} \ , \quad \tilde{\tau}(t) = \frac{\tau_1(t) - \tau_2(t)}{2} \ , \quad \bar{\tau}(t) = \frac{\tau_1(t) + \tau_2(t)}{2} \ ,$$

and

$$q_1(t) = \bar{q}(t) + \tilde{q}(t) \ , \quad q_2(t) = \bar{q}(t) - \tilde{q}(t) \ , \quad \tau_1(t) = \bar{\tau}(t) + \tilde{\tau}(t) \ , \quad \tau_2(t) = \bar{\tau}(t) - \tilde{\tau}(t) \ .$$

Where $q_1$ and $q_2$ are the parameters (current abscissae) that define the status of the motor means and of the follower member (e.g. $q_m$ and $q_l$ of the drive and driven pulleys in Fig. 1), while $\tau_1$ and $\tau_2$ are the drive and driven torques ($\tau_m$ and $\tau_l$ in Fig. 1).

As aforesaid, the assembly comprising the rollers 105, 205 serves as a tensioner for the cables 103 and 203; it is arranged along the axis of symmetry Y between the two motors 110 associated with the pulleys 100, 101, and balances the tensions created by the individual motors.

By moving the tensioner assembly, therefore, a symmetrical tension is generated in the cables, and the mean torques have no effect on the differential assembly 20.

The torque transmitted to the clutch interface is twice the mean torque exerted by each individual motor; the mean radii of the drive pulleys 100, 101 and driven pulley 300 define a transmission ratio, while the mean system transmits no differential torque.

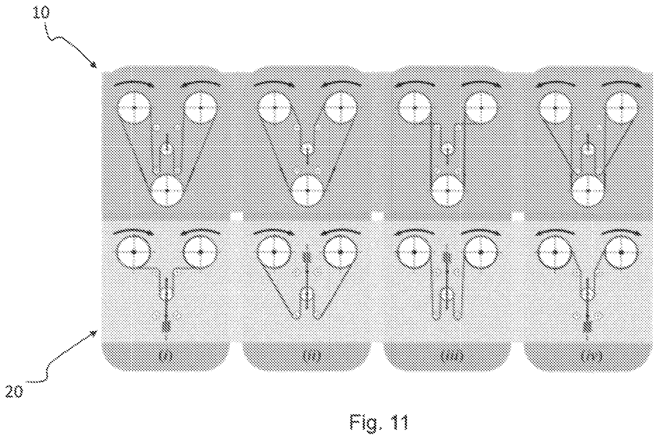

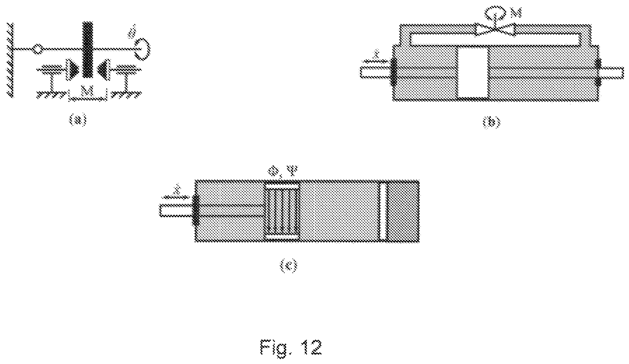

Figure 11 shows a series of possible variations i) -iv) for the motor assembly 10 and the clutch assembly 20 previously considered, whereas Figure 12 shows some possible variants a), b), c) of an actuator that can be used for controlling the clutch 200 in the device of Fig. 1.

The above description has made clear how the actuation method according to the invention and the related device implementing it can reach the goals initially set herein, while also overcoming the underlying technical problems.

In fact, the general teaching of exploiting the clutch included in the robotic apparatuses as a safety element leads to attaining not only inherent apparatus safety in the event of shocks or sudden overloads, but also energy savings that would otherwise be impossible to attain or anyway less remarkable.

In other words, it can be said that the invention teaches to exploit a component like the clutch, intended for preventing damage to robotic apparatuses, also for operating the apparatuses themselves, i.e. for controlling the members to be moved, thus improving the efficiency and effectiveness of the same apparatuses.

This result is attained by transforming the clutch, which in the prior art is usually a passive component and/or a component that is controlled by a dedicated actuator, which is inactive most of the time, into an active component thanks to the use of a new method of actuation.

Such method provides for controlling the actuation of the member to be moved in the robotic apparatus, e.g. an articulated arm or a gripping means, or the like, by actuating the clutch in such a way as to exploit the inertiae and weight of the member itself, whenever this may be advantageous, thus saving electric energy for the electric motors and/or obtaining regenerative energy.

For this purpose, the robotic apparatuses taken into consideration herein comprise rechargeable batteries and/or ultracapacitors, which permit the accumulation of regenerative energy produced by the backward motion of the transmission by exploiting the force of gravity acting upon the follower member.

In practice, during some operating phases the clutch is disengaged to disconnect the follower member from the respective motor, so as to allow it to move idly (e.g. a rotor that keeps turning due to inertia), or is engaged to promote backward motion due to the gravitational effect (e.g. a robotic arm that, after having been raised, returns into a lowered condition under its own weight).

During the active operating phases of the robotic apparatus, the clutch is engaged to establish the connection between the motor and the follower member to be moved, so that the former can transmit a drive torque to the latter in accordance with the commands issued by the system governing the robotic apparatus.

Clutch engagement and disengagement are effected in a controlled or anyway predefined serial manner (i.e. engaged-disengaged); preferably, clutch engagement and disengagement can be effected progressively, i.e. by gradually controlling the drive torque being transmitted.

The length of the time intervals during which the clutch remains disengaged or engaged may vary from a few fractions (tenths or even hundredths) of a second to a few seconds; the frequency and, more generally, the cycles or series of engagements and disengagements of the clutch, as well as the degree of activation of the latter, are managed by a processor or anyway an electronic computer of the robotic apparatus, which allows issuing to the various components of the apparatus the commands necessary for achieving the above-described effects.

In accordance with the invention, the clutch requires no specific actuator specially dedicated thereto, since the motor(s) imparting the drive torque to the follower member is (are) used for controlling the clutch as well.

In this case, there may be a mechanical transmission between the motor(s) and the follower member, which, in accordance with the above-described preferred embodiment of the invention, consists of a cable, a belt, a chain or another appropriate flexible element. The features of the invention are anyway specifically set out in the following claims.

## Claims

1. Method for actuating a follower member (30, 300, 301, 302) in a robotic apparatus comprising a motor assembly (10, 100, 101, 110) for the actuation of the follower member, a clutch assembly (20, 200, 201; 310) interposed between the follower member (30, 300, 301, 302) and the motor assembly (10, 100, 101, 110) to allow limiting the resistant torque ($\tau_l$) transmitted from the follower member (30, 300, 301, 302) in case of sudden overloads, wherein the clutch assembly (20, 200, 201; 310) is actuated in a manner such as to connect and/or disconnect the motor assembly (10, 100, 101, 110) and the follower member (30, 300, 301, 302) to/from each other for controlled time intervals during the operation of the robotic apparatus, **characterized in that** it comprises the step of actuating the clutch assembly (20, 200, 201; 310) through the motor assembly (10, 100, 101, 110), omitting specific clutch actuating means.

2. Method according to claim 1, wherein the clutch assembly (20, 200, 201; 310) can be actuated in order to connect and/or disconnect the motor assembly (10, 100, 101, 110) and the follower member (30, 300, 301, 302) to/from each other even when the motor assembly (10, 100, 101, 110) is not driving the follower member (30, 300, 301, 302).

3. Method according to claim 2, comprising a step of recovering regenerative electric energy when the motor assembly (10, 100, 101, 110) is not driving the follower member (30, 300, 301, 302), wherein the clutch assembly (20, 200, 201; 310) connects the motor assembly (10, 100, 101, 110) and the follower member (30, 300, 301, 302) to each other, so as to transmit a backward torque from the latter towards the former.

4. Method according to any one of the preceding claims, wherein the step of connecting and/or disconnecting the motor assembly (10, 100, 101, 110) and the follower member (30, 300, 301, 302) to/from each other for controlled time intervals during the operation of the robotic apparatus is carried out in a continuous manner, or anyway in such a way as to control the drive and/or resistant torque ($\tau_m$, $\tau_l$) being transmitted by the clutch assembly (20, 200, 201; 310).

5. Method according to any one of the preceding claims, wherein the motor assembly (10, 100, 101, 110) is of the electric type.

6. Method according to any one of the preceding claims, wherein the clutch assembly (20, 200, 201; 310) is preferably actuated for ratios ($\omega/\omega_o$) between the revolution speed ($\omega$) of the follower member and the revolution speed ($\omega_o$) of the motor assembly (10, 100, 101, 110).

7. Device for implementing the method according to any one of the preceding claims, comprising a motor assembly (10, 100, 101, 110), a clutch assembly (20, 200, 201; 310) and a follower member (30, 300, 301, 302), wherein the clutch assembly (20, 200, 201; 310) is operationally interposed between the follower member (30, 300, 301, 302) and the motor assembly (10, 100, 101, 110) to allow limiting the resistant torque ($\tau_l$) transmitted by the follower member (30, 300, 301, 302) in case of sudden overloads, wherein the clutch assembly (20, 200, 201; 310) can be actuated in order to connect and/or disconnect the motor assembly (10, 100, 101, 110) and the follower member (30, 300, 301, 302) to/from each other for controlled time intervals, **characterized in that** the motor assembly (10, 100, 101, 110) is connected to the clutch assembly (20, 200, 201; 310) in such a way that the former can actuate the latter, omitting specific clutch actuating means.

8. Device according to claim 7, wherein the motor assembly (10) comprises a pair of pulleys (100, 101) driven by respective electric actuators and/or motors (110) and connected to the follower member (30, 300, 301, 302) through a first flexible transmission element (103).

9. Device according to claim 8, wherein the clutch assembly (20, 200, 201; 310) comprises a differential mechanism (200, 201, 203, 205, 207) adapted to vary the tension of the first flexible element (103) of the transmission, so as to actuate the clutch (310) as a function of the differences between the drive torque and the resistant torque ($\tau_m$, $\tau_l$) being applied to the follower member (30, 300, 301, 302).

10. Device according to claim 9, wherein the motor assembly (10, 100, 101, 110) comprises a first flexible element tensioning roller (105) of the first flexible transmission element (103), and wherein the differential mechanism comprises a pair of second pulleys (210, 211) respectively integral in rotation with the drive pulleys (100, 101), a second flexible element (203) extending between the second pulleys (210, 211) and second tensioning roller (205) of the second flexible element (203), said second tensioning roller (205) moving integrally with the first flexible element tensioning roller (105), which is movably supported in order to vary the tension of the second flexible element (203).

11. Device according to any one of claims 7 to 10, wherein the clutch assembly (20, 200, 201; 310) is interfaced, at least partly, in the follower member (30, 300, 301, 302).

12. Robotic apparatus comprising an actuation device according to any one of claims 7 to 11.

**Patentansprüche**

1. Verfahren zur Betätigung eines Mitnehmerelements (30, 300, 301, 302) in einer Robotervorrichtung, umfassend eine Motorbaugruppe (10, 100, 101, 110) zur Betätigung des Mitnehmerelements, eine Kupplungsbaugruppe (20, 200, 201; 310), die zwischen das Mitnehmerelement (30, 300, 301, 302) und die Motorbaugruppe (10, 100, 101, 110) eingefügt ist, um das Widerstandsmoment ($\tau_l$), das vom Mitnehmerelement (30, 300, 301, 302) im Falle plötzlicher Überlasten übertragen wird, begrenzen zu können, wobei die Kupplungsbaugruppe (20, 200, 201; 310) derart betätigt wird, dass sie die Motorbaugruppe (10, 100, 101, 110) und das Mitnehmerelement (30, 300, 301, 302) für kontrollierte Zeitintervalle während des Betriebs der Robotervorrichtung miteinander verbindet und/oder voneinander trennt, **dadurch gekennzeichnet, dass** es den Schritt des Betätigens der Kupplungsbaugruppe (20, 200, 201; 310) über die Motorbaugruppe (10, 100, 101, 110) unter Verzicht auf spezifische Kupplungsbetätigungsmittel umfasst.

2. Verfahren nach Anspruch 1, wobei die Kupplungsbaugruppe (20, 200, 201; 310) betätigt werden kann, um die Motorbaugruppe (10, 100, 101, 110) und das Mitnehmerelement (30, 300, 301, 302) miteinander zu verbinden und/oder voneinander zu trennen, selbst wenn die Motorbaugruppe (10, 100, 101, 110) das Mitnehmerelement (30, 300, 301, 302) nicht antreibt.

3. Verfahren nach Anspruch 1, umfassend einen Schritt des Rückgewinnens regenerativer elektrischer Energie, wenn die Motorbaugruppe (10, 100, 101, 110) das Mitnehmerelement (30, 300, 301, 302) nicht antreibt, wobei die Kupplungsbaugruppe (20, 200, 201; 310) die Motorbaugruppe (10, 100, 101, 110) und das Mitnehmerelement (30, 300, 301, 302) miteinander verbindet, um ein Rückwärtsmoment von Letzterem auf Erstere zu übertragen.

4. Verfahren nach einem der vorhergehenden Ansprüche, wobei der Schritt des Verbindens und/oder Trennens der Motorbaugruppe (10, 100, 101, 110) und des Mitnehmerelements (30, 300, 301, 302) miteinander bzw. voneinander für kontrollierte Zeitintervalle während des Betriebs der Robotervorrichtung kontinuierlich oder jedenfalls derart ausgeführt wird, dass das Antriebs- und/oder Widerstandsmoment ($\tau_m$, $\tau_l$) durch die Kupplungsbaugruppe (20, 200, 201; 310) übertragen wird.

5. Verfahren nach einem der vorhergehenden Ansprüche, wobei die Motorbaugruppe (10, 100, 101, 110) vom elektrischen Typ ist.

6. Verfahren nach einem der vorhergehenden Ansprüche, wobei die Kupplungsbaugruppe (20, 200, 201; 310) vorzugsweise für Verhältnisse ($\omega/\omega_o$) zwischen der Drehzahl ($\omega$) des Mitnehmerelements und der Drehzahl ($\omega_o$) der Motorbaugruppe (10, 100, 101, 110) betätigt wird.

7. Einrichtung zum Implementieren des Verfahrens nach einem der vorhergehenden Ansprüche, umfassend eine Motorbaugruppe (10, 100, 101, 110), eine Kupplungsbaugruppe (20, 200, 201; 310) und ein Mitnehmerelement (30, 300, 301, 302), wobei die Kupplungsbaugruppe (20, 200, 201; 310) funktionell zwischen das Mitnehmerelement (30, 300, 301, 302) und die Motorbaugruppe (10, 100, 101, 110) eingefügt ist, um das Widerstandsmoment ($\tau_l$), das vom Mitnehmerelement (30, 300, 301, 302) im Falle plötzlicher Überlasten übertragen wird, begrenzen zu können, wobei die Kupplungsbaugruppe (20, 200, 201; 310) betätigt werden kann, um die Motorbaugruppe (10, 100, 101, 110) und das Mitnehmerelement (30, 300, 301, 302) für kontrollierte Zeitintervalle miteinander zu verbinden und/oder voneinander zu trennen, **dadurch gekennzeichnet, dass** die Motorbaugruppe (10, 100, 101, 110) derart mit der Kupplungsbaugruppe (20, 200, 201; 310) verbunden ist, dass Erstere Letztere unter Verzicht auf spezifische Kupplungsbetätigungsmittel betätigen kann.

8. Einrichtung nach Anspruch 7, wobei die Motorbaugruppe (10) ein Paar von Riemenscheiben (100, 101) umfasst, das durch jeweilige elektrische Aktoren und/oder Motoren (110) angetrieben wird und über ein erstes flexibles Übertragungselement (103) mit dem Mitnehmerelement (30, 300, 301, 302) verbunden ist.

9. Einrichtung nach Anspruch 8, wobei die Kupplungsbaugruppe (20, 200, 201; 310) einen Differentialmechanismus (200, 201, 203, 205, 207) umfasst, der dazu ausgelegt ist, die Spannung des ersten flexiblen Übertragungselements (103) zu variieren, um die Kupplung (310) als eine Funktion der Differenzen zwischen dem Antriebsmoment und dem Widerstandsmoment ($\tau_m$, $\tau_l$), die auf das Mitnehmerelement (30, 300, 301, 302) aufgebracht werden, zu betätigen.

10. Einrichtung nach Anspruch 9, wobei die Motorbaugruppe (10, 100, 101, 110) eine Spannrolle für ein erstes flexibles Element (105) des ersten flexiblen Übertragungselements (103) umfasst, und wobei der Differentialmechanismus ein Paar von zweiten Riemenscheiben (210, 211) umfasst, die sich jeweils gemeinsam mit den Antriebsriemenscheiben (100, 101) drehen, wobei ein zweites flexibles Element (203) sich zwischen den zweiten Riemenscheiben (210, 211) und einer zweiten Spannrolle (205) des zweiten flexiblen Elements (203) erstreckt und die zweite Spannrolle (205) sich gemeinsam mit der Spannrolle für das erste flexible Element (105) bewegt, die beweglich gelagert ist, um die Spannung des zweiten flexiblen Elements (203) zu variieren.

11. Einrichtung nach einem der Ansprüche 7 bis 10, wobei die Kupplungsbaugruppe (20, 200, 201; 310) zumindest teilweise im Mitnehmerelement (30, 300, 301 302) angekoppelt ist.

12. Robotervorrichtung, umfassend eine Betätigungseinrichtung nach einem der Ansprüche 7 bis 11.

**Revendications**

1. Procédé d'actionnement d'un élément suiveur (30, 300, 301, 302) dans un appareil robotique comprenant un ensemble moteur (10, 100, 101, 110) pour l'actionnement de l'élément suiveur, un ensemble embrayage (20, 200, 201 ; 310) interposé entre l'élément suiveur (30, 300, 301, 302) et l'ensemble moteur (10, 100, 101, 110) pour permettre la limitation du couple résistant ($\tau_l$) transmis par l'élément suiveur (30, 300, 301, 302) en cas de surcharges brusques, dans lequel l'ensemble embrayage (20, 200, 201 ; 310) est actionné de manière à relier l'ensemble moteur (10, 100, 101, 110) et l'élément suiveur (30, 300, 301, 302) l'un à l'autre et/ou à les séparer l'un de l'autre pendant des intervalles de temps commandés lors du fonctionnement de l'appareil robotique, **caractérisé en ce qu'**il comprend l'étape d'actionnement de l'ensemble embrayage (20, 200, 201 ; 310) par le biais de l'ensemble moteur (10, 100, 101, 110), omettant des moyens d'actionnement d'embrayage spécifiques.

2. Procédé selon la revendication 1, dans lequel l'ensemble embrayage (20, 200, 201 ; 310) peut être actionné afin de relier l'ensemble moteur (10, 100, 101, 110) et l'élément suiveur (30, 300, 301, 302) l'un à l'autre et/ou de les séparer l'un de l'autre même lorsque l'ensemble moteur (10, 100, 101, 110) n'entraîne pas l'élément suiveur (30, 300, 301, 302).

3. Procédé selon la revendication 2, comprenant une étape de récupération d'énergie électrique régénérative lorsque l'ensemble moteur (10, 100, 101, 110) n'entraîne pas l'élément suiveur (30, 300, 301, 302), dans lequel l'ensemble embrayage (20, 200, 201 ; 310) relie l'ensemble moteur (10, 100, 101, 110) et l'élément suiveur (30, 300, 301, 302) l'un à l'autre, de façon à transmettre un couple arrière du second au premier.

4. Procédé selon l'une quelconque des revendications précédentes, dans lequel l'étape consistant à relier l'ensemble moteur (10, 100, 101, 110) et l'élément suiveur (30, 300, 301, 302) et/ou à les séparer pendant des intervalles de temps commandés lors du fonctionnement de l'appareil robotique est réalisée de manière continue ou, dans tous les cas, de manière à commander l'entraînement et/ou le couple résistant ($\tau_m$, $\tau_l$) transmis par l'ensemble embrayage (20, 200, 201 ; 310).

5. Procédé selon l'une quelconque des revendications précédentes, dans lequel l'ensemble moteur (10, 100, 101, 110) est du type électrique.

6. Procédé selon l'une quelconque des revendications précédentes, dans lequel l'ensemble embrayage (20, 200, 201 ; 310) est de préférence actionné pour des rapports ($\omega/\omega_o$) entre la vitesse de rotation ($\omega$) de l'élément suiveur et la vitesse de rotation ($w_o$) de l'ensemble moteur (10, 100, 101, 110).

7. Dispositif de mise en oeuvre du procédé selon l'une quelconque des revendications précédentes, comprenant un ensemble moteur (10, 100, 101, 110), un ensemble embrayage (20, 200, 201 ; 310) et un élément suiveur (30, 300, 301, 302), dans lequel l'ensemble embrayage (20, 200, 201 ; 310) est interposé de manière fonctionnelle entre l'élément suiveur (30, 300, 301, 302) et l'ensemble moteur (10, 100, 101, 110) pour permettre la limitation du couple résistant ($\tau_l$) transmis par l'élément suiveur (30, 300, 301, 302) en cas de surcharges brusques, dans lequel l'ensemble embrayage (20, 200, 201 ; 310) peut être actionné afin de relier l'ensemble moteur (10, 100, 101, 110) et l'élément suiveur (30, 300, 301, 302) l'un à l'autre et/ou de les séparer l'un de l'autre pendant des intervalles de temps commandés, **caractérisé en ce que** l'ensemble moteur (10, 100, 101, 110) est relié à l'ensemble embrayage (20, 200, 201 ; 310) de telle sorte que le premier peut actionner le second, omettant des moyens d'actionnement d'embrayage spécifiques.

8. Dispositif selon la revendication 7, dans lequel l'ensemble moteur (10) comprend une paire de poulies (100, 101) entraînées par des actionneurs et/ou moteurs électriques respectifs (110) et reliées à l'élément suiveur (30, 300, 301, 302) par le biais d'un premier élément de transmission souple (103).

9. Dispositif selon la revendication 8, dans lequel l'ensemble embrayage (20, 200, 201 ; 310) comprend un mécanisme différentiel (200, 201, 203, 205, 207) adapté pour faire varier la tension du premier élément souple (103) de la transmission, de façon à actionner l'embrayage (310) en fonction des différences entre le couple d'entraînement et le couple résistant ($\tau_m$, $\tau_l$) appliqués à l'élément suiveur (30, 300, 301, 302).

10. Dispositif selon la revendication 9, dans lequel l'ensemble moteur (10, 100, 101, 110) comprend un premier galet tendeur d'élément souple (105) du premier élément de transmission souple (103), et dans lequel le mécanisme différentiel comprend une paire de deuxièmes poulies (210, 211) respectivement solidaires en rotation des poulies d'entraînement (100, 101), un deuxième élément souple (203) s'étendant entre les deuxièmes poulies (210, 211) et un deuxième galet tendeur (205) du deuxième élément souple (203), ledit deuxième galet tendeur (205) se déplaçant d'un seul tenant avec le premier rouleau tendeur d'élément souple (105), qui est supporté de façon mobile afin de faire varier la tension du deuxième élément souple (203).

11. Dispositif selon l'une quelconque des revendications 7 à 10, dans lequel l'ensemble embrayage (20, 200, 201 ; 310) est interfacé, au moins partiellement, dans l'élément suiveur (30, 300, 301, 302).

12. Appareil robotique comprenant un dispositif d'actionnement selon l'une quelconque des revendications 7 à 11.

Fig. 1

Fig. 2a

Fig. 2b

Fig. 3

Fig. 4a

Fig. 4b

LEGENDA:
"drive" = "azionare";
"exploit clutch" = "sfruttare frizione";
"regenerate" = "rigenerare";
"power saving" = "risparmio potenza";
"power demand" = "richiesta potenza"

Fig. 5a

Fig. 5b

Fig. 6a

Fig. 6b

Fig. 7

Fig. 8a

Fig. 8b

Fig. 9

Fig. 10

Fig. 11

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014074293 A
- JP 3578375 A

- WO 2017185176 A


**Non-patent literature cited in the description**

- **SANGOK SEOK ; ALBERT WANG ; MENG YEE MICHAEL CHUAH et al.** Design Principles for Energy-Efficient Legged Locomotion and Implementation on the MIT Cheetah Robot. *IEEE/ASME Transactions on Mechatronics,* June 2015, vol. 20 (3), 1117-1129
- Energy Efficient use of robotics in the automobile industry. **DAVIS MEIKE ; LEONIDS RIBICKIS.** Advanced Robotics (ICAR), 2011 15th International Conference. IEEE, 507-511
- **FARSHID NASERI ; EBRAHIM FARJAH ; TEYMOOR GHANBARI.** An Efficient Regenerative Braking System Based on Battery/Supercapacitor for Electric, Hybrid and Plug-In Hybrid Electric Vehicles with BLDC Motor. *IEEE Transaction on Vehicular Technology,* 2016, 1710-1715

- Enhanced approach for energy-efficient trajectory generation of industrial robots. **CHRISTIAN HANSEN ; JULIAN ITJEN ; DAVIS MEIKE ; TOBIAS ORTMAIER.** Automation Science and Engineering (CASE), 2012 IEEE International Conference. IEEE, 2012, 1-7
- **YUSHI WANG et al.** Exploiting the Slip Behaviour of Friction Based Clutches for Safer Adjustable Torque Limiters. *2017 IEEE International Conference on Advanced Intelligent Mechatronics (AIM),* 03 July 2017
- **FLORIAN PETIT et al.** Bidirectional antagonistic variable stiffness actuation: Analysis, design & implementation. *2010 IEEE International Conference on Robotics and Automation ICRA,* 03 May 2010